# EUROPEAN PATENT APPLICATION

(11) **EP 4 831 215 A1**
(43) Date of publication of application: **28.10.2026**
(21) Application number: 24907413.9
(22) Date of filing: 17.12.2024
(51) Int. Cl.: C08F 291/04, C08F 2/18, C08F 2/44, C08L 51/00, C08F 6/24

(54) **METHOD FOR PRODUCING FLUORINE-CONTAINING POLYMER, AND SOLID COMPOSITION**

(30) Priority: 19.12.2023 JP 2023213841
(71) Applicant: AGC Inc., Chiyoda-ku Tokyo 100-8405 (JP)
(72) Inventor: MATSUMOTO, Mariko, Tokyo 100-8405 (JP); SHIBASAKI, Kosuke, Tokyo 100-8405 (JP); ABE, Kaori, Tokyo 100-8405 (JP); OTSUGU, Satoshi, Tokyo 100-8405 (JP); TAGUCHI, Daisuke, Tokyo 100-8405 (JP)
(74) Representative: Müller-Boré & Partner Patentanwälte PartG mbB
(86) International application number: PCT/JP2024/044590
(87) International publication number: WO 2025/135028

(57) **Abstract**

To provide a method for producing a fluorinated polymer by which a high molecular weight fluorinated polymer can be produced. The method for producing a fluorinated polymer of the present invention is a method for producing a fluorinated polymer, which comprises polymerizing, in an aqueous dispersion that contains a first fluorinated polymer and an aqueous medium, a monomer containing a fluorinated monomer, to produce a second fluorinated polymer that is different from the first fluorinated polymer; wherein before the start of the polymerization of the monomer, the total concentration of cations contained in the aqueous dispersion is 2 mass ppm or less; and wherein before the start of the polymerization of the monomer, the total concentration of anions excluding fluoride ions, sulfate ions and chloride ions contained in the aqueous dispersion is 9 mass ppm or less.

## Description

### TECHNICAL FIELD

The present invention relates to a method for producing a fluorinated polymer, and a solid composition.

### BACKGROUND ART

Fluorinated polymers such as tetrafluoroethylene-based copolymers, which are excellent in heat resistance, chemical resistance, flame retardance, weather resistance, etc., are used in various industrial fields.

As a method for producing a fluorinated polymer, Patent Document 1 discloses a method of emulsion-polymerizing a fluorinated monomer in an aqueous medium in the presence of a radical initiator and a multifunctional dispersing agent. Patent Document 1 discloses that the multifunctional dispersing agent has repeating units based on an ethylenic unsaturated functional group monomer containing -SO₃Xa (Xa is H, an ammonium group or a monovalent metal) and that at the time production of the multifunctional dispersing agent, an ion exchange resin is used to remove anions and cations.

### PRIOR ART DOCUMENTS

### PATENT DOCUMENTS

Patent Document 1: JP-A-2020-510737

### DISCLOSURE OF INVENTION

### TECHNICAL PROBLEM

In recent years, high molecular weight fluorinated polymers have been required. The present inventors have attempted to produce a fluorinated polymer with reference to the method for producing a fluorinated polymer disclosed in Patent Document 1 and found that a high molecular weight fluorinated polymer could not be obtained in some cases, and the method for producing a fluorinated polymer has room for improvement.

The object of the present invention is to provide a method for producing a fluorinated polymer, by which a high molecular weight fluorinated polymer can be produced.

Further, from the viewpoint of reduction of the environmental burden, it is preferred to use substantially no emulsifier, in particular, to use substantially no emulsifier having a fluorine atom. It is also an object of the present invention to provide a fluorinated polymer substantially without using an emulsifier, the fluorinated polymer having a molecular weight equal to or higher than that when a conventional emulsifier is used.

### SOLUTION TO PROBLEM

The present inventors have conducted extensive studies and as a result found that the above objects can be achieved by the following configurations.
[1] A method for producing a fluorinated polymer, which comprises polymerizing, in an aqueous dispersion that contains a first fluorinated polymer and an aqueous medium, a monomer containing a fluorinated monomer, to produce a second fluorinated polymer that is different from the first fluorinated polymer, wherein
   before the start of the polymerization of the monomer, the total concentration of cations contained in the aqueous dispersion is 2 mass ppm or less to the total mass of the aqueous medium in the aqueous dispersion, and wherein
   before the start of the polymerization of the monomer, the total concentration of anions excluding fluoride ions, sulfate ions and chloride ions contained in the aqueous dispersion is 9 mass ppm or less to the total mass of the aqueous medium in the aqueous dispersion.
[2] The method for producing a fluorinated polymer according to [1], wherein before the start of the polymerization of the monomer, the total concentration of fluoride ions, sulfate ions and chloride ions contained in the aqueous dispersion, is 50 mass ppm or less to the total mass of the aqueous medium in the aqueous dispersion.
[3] The method for producing a fluorinated polymer according to [1] or [2], wherein the first fluorinated polymer is a polymer having a hydrophilic group.
[4] The method for producing a fluorinated polymer according to any one of [1] to [3], wherein the first fluorinated polymer has a glass transition temperature of 10°C or lower.
[5] The method for producing a fluorinated polymer according to any one of [1] to [4], wherein
   before the start of the polymerization of the monomer, the content of the first fluorinated polymer is 0.01 to 4.0 mass% to the total mass of the aqueous dispersion, and wherein
   before the start of the polymerization of the monomer, the concentration of a fluorinated emulsifier contained in the aqueous dispersion is 100 mass ppm or less to the total mass of the first fluorinated polymer in the aqueous dispersion.
[6] The method for producing a fluorinated polymer according to any one of [1] to [5], wherein the first fluorinated polymer contains units based on tetrafluoroethylene and units based on a perfluoro(alkyl vinyl ether).
[7] The method for producing a fluorinated polymer according to [6], wherein in the first fluorinated polymer, the proportion of the units based on a perfluoro(alkyl vinyl ether) is 20 to 60 mol% to the total amount of the units based on tetrafluoroethylene and the units based on a perfluoro(alkyl vinyl ether).
[8] The method for producing a fluorinated polymer according to any one of [1] to [7], wherein the amount of the monomer used is 1 to 50 parts by mass per 100 parts by mass of the amount of the aqueous medium used.
[9] The method for producing a fluorinated polymer according to any one of [1] to [8], wherein the monomer is polymerized in the presence of a polymerization initiator.
[10] The method for producing a fluorinated polymer according to any one of [1] to [9], wherein the fluorinated monomer contains at least one member selected from the group consisting of tetrafluoroethylene, chlorotrifluoroethylene and vinylidene fluoride.
[11] The method for producing a fluorinated polymer according to any one of [1] to [10], wherein the fluorinated monomer contains tetrafluoroethylene.
[12] The method for producing a fluorinated polymer according to any one of [1] to [11], wherein the aqueous dispersion is obtained via a step of bringing a material dispersion that contains the first fluorinated polymer and the aqueous medium into contact with an anion exchange resin.
[13] The method for producing a fluorinated polymer according to any one of [1] to [12], wherein the aqueous dispersion is obtained via a step of bringing a material dispersion that contains the first fluorinated polymer and the aqueous medium into contact with a cation exchange resin.
[14] A solid composition comprising a first fluorinated polymer and a second fluorinated polymer that is different from the first fluorinated polymer, wherein
   the total concentration of cations is 2 mass ppm or less to the total mass of the solid composition.
[15] The solid composition according to [14], which has a total content of metal elements of 2 mass ppm or less to the total mass of the solid composition.

### ADVANTAGEOUS EFFECTS OF INVENTION

According to the present invention, it is possible to provide a method for producing a fluorinated polymer, by which a high molecular weight fluorinated polymer can be produced, and a solid composition containing the fluorinated polymer.

### DESCRIPTION OF EMBODIMENTS

Meanings of terms used in the present specification are as follows.
" to " used to show a range of numerical values is used to include numerical values before and after it as the lower limit value and the upper limit value. In numerical ranges described stepwise in this specification, the upper limit value or the lower limit value described in a certain numerical range may be replaced with an upper limit value or a lower limit value of another numerical range described stepwise. In numerical ranges described in this specification, the upper limit value or the lower limit value described in a certain numerical range may be replaced with values indicated in Examples.

In this specification, as each component, a single type of a substance corresponding to the component may be used alone, or two or more types may be used in combination. In a case where two or more types are used in combination for each component, the content of the component means the total content of the substances used in combination, unless otherwise specified.

In this specification, a combination of two or more preferred embodiments corresponds to a more preferred embodiment.

"Units" generically mean an atomic group derived from one molecule of a monomer, directly formed by polymerization of the monomer, and an atomic group obtained by chemical conversion of a part of the atomic group. "Units based on a monomer" may sometimes be referred to simply as "units".

The content (mass% or mol%) of each units to all units of a polymer is obtained by analyzing the polymer by nuclear magnetic resonance spectroscopy (NMR). Usually, the content of each units calculated from the amount of charge of each monomer substantially agrees with the actual content of each units.

### [Method for producing fluorinated polymer]

The method for producing a fluorinated polymer of the present invention (hereinafter also referred to as "the present production method") is a method for producing a fluorinated polymer, which comprises polymerizing, in an aqueous dispersion that contains a first fluorinated polymer and an aqueous medium (hereinafter also referred to as "aqueous dispersion X"), a monomer containing a fluorinated monomer (hereinafter also referred to as "specific monomer") to produce a second fluorinated polymer that is different from the first fluorinated polymer.

In the present production method, before the start of the polymerization of the specific monomer, the total concentration of cations contained in the aqueous dispersion X is 2 mass ppm or less to the total mass of the aqueous medium in the aqueous dispersion X.

In the present production method, before the start of the polymerization of the monomer, the total concentration of anions excluding fluoride ions, sulfate ions and chloride ions (hereinafter also referred to as "other anions") contained in the aqueous dispersion X is 9 mass ppm or less to the total mass of the aqueous medium in the aqueous dispersion X.

According to the present production method, a high molecular weight second fluorinated polymer is obtained. The details of the mechanism has not yet been clearly understood, but is estimated to be as follows.

If the total concentration of the cations in the aqueous dispersion X is high, the first fluorinated polymer may not stably be dispersed in the aqueous dispersion X, and polymerization of the specific monomer in the aqueous dispersion X may sometimes be impaired. Further, the other anions may sometimes function as a chain transfer agent depending upon the type, and thus if the total concentration of the other anions is high, polymerization of the specific monomer may sometimes be impaired. To solve this problem, the aqueous dispersion X used in the present production method has sufficiently low total concentration of the cations and total concentration of the other anions, and accordingly polymerization of the specific monomer well proceeds in the aqueous dispersion X, and a high molecular weight second fluorinated polymer is obtained.

### <Aqueous dispersion X>

In the present production method, the aqueous dispersion X that contains the first fluorinated polymer and the aqueous medium is used.

### (First fluorinated polymer)

The aqueous dispersion X may contain the first fluorinated polymer.

It is estimated as follows. That is, the first fluorinated polymer adsorbs and includes the specific monomer at its hydrophobic moiety at the time of polymerization of the specific monomer to solubilize the specific monomer, and by adding a polymerization initiator thereto, the specific monomer is polymerized in particles of the first fluorinated polymer. Further, the first fluorinated polymer contributes to dispersion stabilization of the components in the aqueous medium.

The first fluorinated polymer is preferably a polymer different from the second fluorinated polymer.

The first fluorinated polymer is a polymer having fluorine atoms.

The first fluorinated polymer is preferably a fluorinated polymer having a hydrophilic group.

The hydrophilic group may, for example, be a hydroxide group or an ionic functional group. The ionic functional group may be either a cationic functional group or an anionic functional group, and is preferably an anionic functional group. The anionic functional group may, for example, be an anionic functional group such as a carboxylate group (-COO⁻), a sulfonate group (-SO₃⁻), a sulfate group (-SO₄²⁻), a phosphonate group (-PO₃²⁻) or a phosphate group (-PO₄³⁻). The hydrophilic group is preferably a monovalent group.

The fluorinated polymer having the hydrophilic group may have one or more hydrophilic groups. The fluorinated polymer having the hydrophilic group may have the hydrophilic group in its side chain or at its terminal end.

The hydrophilic group is a group derived from the polymerization initiator, or a hydrophilic group contained in units based on a monomer having the hydrophilic group.

The glass transition temperature (hereinafter also referred to as "Tg") of the first fluorinated polymer is preferably 10°C or lower, more preferably 5°C or lower, further preferably 3°C or lower, particularly preferably 0°C or lower, whereby the specific monomer can efficiently be adsorbed.

Tg of the first fluorinated polymer is, in view of thermal stability after molding, preferably -50°C or higher, more preferably -45°C or higher, further preferably -40°C or higher.

Tg of the first fluorinated polymer is measured by differential scanning calorimetry (DSC), and measurement conditions will be described in detail in EXAMPLES.

A method of adjusting Tg of the first fluorinated polymer to be within the above range, may, for example, be a method of adjusting the type or the amount of the monomer used for production of the first fluorinated polymer.

The first fluorinated polymer preferably contains units based on tetrafluoroethylene (hereinafter also referred to as "TFE") (hereinafter also referred to as "TFE units") and units bases on a perfluoro(alkyl vinyl ether) (hereinafter also referred to as "PAVE") (hereinafter also referred to as "PAVE units"), whereby Tg can readily be adjusted to be within the above range and more excellent effect of the present invention will be achieved.

PAVE is preferably a monomer represented by the formula (1), whereby excellent polymerizability at the time of production of the first fluorinated polymer is achieved and the second fluorinated polymer can be produced more efficiently.

CF₂=CF-O-R^{f1} (1)

In the formula (1), R^{f1} is a C₁₋₁₀ perfluoroalkyl group. The number of carbon atoms in R^{f1} is, in view of more excellent polymerizability, preferably 1 to 8, more preferably 1 to 6, further preferably 1 to 5, particularly preferably 1 to 3.

The perfluoroalkyl group may be linear or branched.

Specific examples of PAVE include perfluoro(methyl vinyl ether) (hereinafter also referred to as "PMVE"), perfluoro(ethyl vinyl ether) (hereinafter also referred to as "PEVE") and perfluoro(propyl vinyl ether) (hereinafter also referred to as "PPVE"), and among them, preferred are PMVE and PPVE, more preferred is PMVE, whereby the second fluorinated polymer can be produced more efficiently.

In a case where the first fluorinated polymer contains the TFE units and the PAVE units, the content of the PAVE units in the first fluorinated polymer is, to the total amount of the TFE units and the PAVE units, preferably 20 to 60 mol%, more preferably 25 to 60 mol%, further preferably 30 to 55 mol%. In a case where PMVE or PPVE is used as PAVE also, the preferred amount used is the same.

In a case where the first fluorinated polymer contains the TFE units and the PAVE units, the total content of the TFE units and the PAVE units in the first fluorinated polymer is, to all units of the first fluorinated polymer, preferably 90 to 100 mol%, more preferably 95 to 100 mol%, further preferably 99 to 100 mol%.

The first fluorinated polymer may contain units based on a monomer other than TFE and PAVE.

The other monomer is preferably hexafluoropropylene.

The first fluorinated polymer preferably contains substantially no units based on other monomer, whereby the second fluorinated polymer can be produced more efficiently.

"Contains substantially no units based on other monomer" means a content of the units based on other monomer of 0.01 mol% or less to all units of the first fluorinated polymer, preferably 0 mol%.

Before the start of the polymerization of the monomer (specific monomer) used for production of the second fluorinated polymer, the content of the first fluorinated polymer is, to the total mass of the aqueous medium in the aqueous dispersion X, preferably 0.01 to 10.0 mass%, and more preferably 0.01 to 5.0 mass%, further preferably 0.01 to 1.0 mass%, whereby the second fluorinated polymer can be produced more efficiently.

In this specification, "before the start of the polymerization of the monomer used for production of the second fluorinated polymer" means immediately before the polymerization start point. The "polymerization start point" means a point when the monomer and the polymerization initiator are allowed to coexist in a reactor after the interior of the reactor is heated to the polymerization temperature or higher, a point when the interior of the reactor is heated to the polymerization temperature or higher after the monomer and the polymerization initiator are allowed to coexist in the reactor, or the like.

The first fluorinated polymer is dispersed in the aqueous medium preferably in the form of particles.

The average particle size of the first fluorinated polymer is preferably 1 to 150 nm, more preferably 10 to 120 nm, further preferably 50 to 120 nm, whereby the second fluorinated polymer can be produced more efficiently.

The average particle size of the first fluorinated polymer is a particle size (D50) at a point where the cumulative volume is 50% on a cumulative curve obtained by measuring the particle size distribution by laser diffraction/scattering method and taking the whole volume of the group of particles to be 100%.

### <Cation>

The cations are derived, for example, from a polymerization initiator used at the time of production of the first fluorinated polymer, and are contained in the aqueous dispersion X containing the first fluorinated polymer in some cases.

Specific examples of the cations include sodium ions, potassium ions, ammonium ions, quaternary ammonium ions, manganese ions, iron ions, cobalt ions, nickel ions, copper ions, zinc ions, cerium ions, silver ions and chromium ions.

Before the start of the polymerization of the monomer used for production of the second fluorinated polymer, the total concentration of the cations contained in the aqueous dispersion X is, to the total mass of the aqueous medium in the aqueous dispersion X, 2 mass ppm or less, and in view of more excellent effect of the present invention, preferably 1 mass ppm or less, more preferably 0.1 mass ppm or less, further preferably less than the quantitative determination limit. The lower limit may be 0 mass ppm.

A method of adjusting the total concentration of the cations contained in the aqueous dispersion X, may be a method of using a cation exchange resin at the time of production of the aqueous dispersion X (to be described below).

The total concentration of the cations to the total mass of the aqueous medium in the aqueous dispersion X is calculated from the total area of peaks of the cations detected in measurement of the aqueous dispersion X, or a material dispersion (or purified material dispersion) used for production of the aqueous dispersion X to be described below, by ion chromatography, using an analytical curve showing the relation between the ammonium ion peak area and amount. The measurement method will be described in detail in EXAMPLES.

For the measurement of the total concentration of the cations contained in the aqueous dispersion X, the aqueous dispersion X may be used, or as described in EXAMPLES, a material dispersion (or purified material dispersion) used for production of the aqueous dispersion X may be used. In the case of measurement by the material dispersion (or purified material dispersion), the total concentration of the cations in the material dispersion (or purified material dispersion) is obtained by the above method, and is converted to the total concentration of the cations in the aqueous dispersion X based on the mass ratio of the aqueous dispersion X to the material dispersion (or purified material dispersion), whereby the total concentration of the cations in the aqueous dispersion X is obtained.

In a case where the aqueous dispersion X is produced by using the purified material dispersion, the measurement is conducted by using the aqueous dispersion X or the purified material dispersion.

### <Other anions>

The other anions refer to anions excluding fluoride ions, sulfate ions and chloride ions.

At the time of production of the first fluorinated polymer, fluoride ions, sulfate ions or chloride ions, which are decomposed products of the polymerization initiator or byproducts in the polymerization, may sometimes form. In a case where a predetermined anion exchange resin is used at the time of production of the aqueous dispersion X for removal of such fluoride ions, sulfate ions and chloride ions, the other anions may be included in the aqueous dispersion X. The details of the mechanism have not yet been clearly understood but are considered to be as follows. That is, by using an anion exchange resin which is likely to be decomposed by a peroxide, the other anions generated from the anion exchange resin are included in the aqueous dispersion X.

The other anions may, for example, be anions having a hydrocarbon group, such as formate ions and acetate ions.

Before the start of the polymerization of the monomer used for production of the second fluorinated polymer, the total concentration of the other anions contained in the aqueous dispersion X is, to the total mass of the aqueous medium in the aqueous dispersion X, 9 mass ppm or less, and in view of more excellent effect of the present invention, preferably 1 mass ppm or less, more preferably 0.5 mass ppm or less, further preferably less than the quantitative determination limit. The lower limit may be 0 mass ppm.

A method of adjusting the total concentration of the other anions contained in the aqueous dispersion X, may be a method of using an anion exchange resin at the time of production of the aqueous dispersion X (to be described below). In particular, it is preferred to use an anion exchange resin which is less decomposed by a peroxide.

The total concentration of the other anions contained in the aqueous dispersion X is calculated from an area that is obtained by subtracting the peak area attributable to the fluoride ions, the peak area attributable to the sulfate ions and the peak area attributable to the chloride ions, from the total area of peaks of the anions detected in measurement of the aqueous dispersion X, or the material dispersion (or purified material dispersion) used for production of the aqueous dispersion X to be described below, by ion chromatography, using an analytical curve showing the relation between the trifluoroacetate ion peak area and amount. The measurement method will be described in detail in EXAMPLES.

For the measurement of the total concentration of the other anions contained in the aqueous dispersion X, the aqueous dispersion X may be used, or as described in EXAMPLES, a material dispersion (or purified material dispersion) used for production of the aqueous dispersion X may be used. In the case of measurement by the material dispersion (or purified material dispersion), the total concentration of the other anions in the material dispersion (or purified material dispersion) is obtained by the above method, and is converted to the total concentration of the other anions in the aqueous dispersion X based on the mass ratio of the aqueous dispersion X to the material dispersion (or purified material dispersion), whereby the total concentration of the other anions in the aqueous dispersion X is obtained.

In a case where the aqueous dispersion X is produced by using the purified material dispersion, the measurement is conducted by using the aqueous dispersion X or the purified material dispersion.

### <Fluoride ions, sulfate ions and chloride ions>

The fluoride ions, sulfate ions and chloride ions (hereinafter also referred to as "the specific anions") are derived from, for example, a polymerization initiator used at the time of production of the first fluorinated polymer, and are contained in the aqueous dispersion X containing the first fluorinated polymer in some cases.

Before the start of the polymerization of the monomer used for production of the second fluorinated polymer, in view of more excellent effect of the present invention, the total concentration of the specific anions contained in the aqueous dispersion X is, to the total mass of the aqueous dispersion in the aqueous dispersion X, preferably 50 mass ppm or less, more preferably 10 mass ppm or less, further preferably 1 mass ppm or less. The lower limit may be 0 mass ppm.

A method of adjusting the total concentration of the specific anions in the aqueous dispersion X to be within the above value, may be the method of using an anion exchange resin at the time or production of the aqueous dispersion X (to be described below).

### <Metal element>

Metal elements may sometimes be contained in the aqueous dispersion X containing the first fluorinated polymer, for example derived from a polymerization initiator used at the time of production of the first fluorinated polymer.

Specific examples of the metal elements include manganese, iron, cobalt, nickel, copper, zinc, cerium, silver and chromium.

Before the start of the polymerization of the monomer used for production of the second fluorinated polymer, the total concentration of the metal elements contained in the aqueous dispersion X is, to the total mass of the aqueous medium in the aqueous dispersion X, 2 mass ppm or less, and with a view to obtaining a higher molecular weight fluorinated polymer, more preferably 1 mass ppm or less. The lower limit may be 0 mass ppm.

A method of adjusting the total concentration of the metal elements contained in the aqueous dispersion X to be the above value, may be the method of using a cation exchange resin at the time of production of the aqueous dispersion X.

The total concentration of the metal elements contained in the aqueous dispersion X may be measured by subjecting the aqueous dispersion X, or the material dispersion (or purified material dispersion) used for production of the aqueous dispersion X, to be described below, to ICP emission spectral analysis. The measurement method will be described in detail in EXAMPLES.

### (Aqueous medium)

The aqueous dispersion X used for the present production method contains an aqueous medium. The aqueous medium contained in the aqueous dispersion X may be the polymerization solvent used for the method for producing the aqueous dispersion X to be described below.

The aqueous medium contained in the aqueous dispersion X may be water or a solvent mixture of water and a water-soluble organic solvent. Specific examples of the water-soluble organic solvent include tert-butanol, propylene glycol, dipropylene glycol, dipropylene glycol monomethyl ether and tripropylene glycol.

Before the start of the polymerization of the monomer used for production of the second fluorinated polymer, the content of the aqueous medium is preferably 60 to 99.9 mass%, more preferably 80 to 99.9 mass%, further preferably 90 to 99.9 mass%, to the total mass of the aqueous dispersion X.

### (Other component)

The aqueous dispersion X used for the present production method may contain a component other than the first fluorinated polymer and the aqueous medium.

Specific examples of other component which the aqueous dispersion X may contain include a chain transfer agent, an emulsifier other than the fluorinated emulsifier, a pH adjusting agent and a wax.

Specific examples of the chain transfer agent include ethyl acetate, methanol, ethanol, t-butyl methyl ether, diethyl ether, n-pentane, cyclohexane, methane and propane.

The fluorinated emulsifier refers to an emulsifier which has a hydrophilic moiety and a hydrophobic moiety and of which the hydrophobic moiety has a fluorine atom. Specific examples of the fluorinated emulsifier include a fluorinated alkanoic acid salt, and a fluorinated ether carboxylic acid.

Specific examples of the emulsifier other than the fluorinated emulsifier include sodium lauryl sulfate, PELEX SS-H manufactured by Kao Corporation, and Newcol 1305-SN manufactured by NIPPON NYUKAZAI CO., LTD.

Specific examples of the pH adjusting agent include inorganic salts. Specific examples of the inorganic salts include phosphates such as disodium hydrogen phosphate and sodium dihydrogen phosphate, and carbonates such as sodium hydrogen carbonate and sodium carbonate. More preferred specific examples of the phosphates include disodium hydrogen phosphate dihydrate and disodium hydrogen phosphate dodecahydrate.

The wax is preferably a paraffin wax. The paraffin wax may be liquid, semi-solid or solid at room temperature. In particular, a saturated hydrocarbon having a number of carbon atoms of 12 or more is preferred. The melting point of the paraffin wax is preferably 40 to 65°C, more preferably 50 to 65°C.

In a case where the aqueous dispersion X contains the chain transfer agent, the content of the chain transfer agent is preferably 0.1 to 5 parts by mass per 100 parts by mass of the aqueous medium. The amount of the chain transfer agent used is preferably 0.1 to 20 parts by mass, more preferably 0.1 to 15 parts by mass, further preferably 0.1 to 10 parts by mass, per 100 parts by mass of the specific monomer used, to be described later.

In a case where the aqueous dispersion X contains the emulsifier other than the fluorinated emulsifier, the content of the emulsifier other than the fluorinated emulsifier is preferably 0.01 to 5 parts by mass per 100 parts by mass of the aqueous medium.

In a case where the aqueous dispersion X contains the pH adjusting agent, the content of the pH adjusting agent is preferably 0.01 to 3.0 parts by mass per 100 parts by mass of the aqueous medium.

In a case where the aqueous dispersion X contains the wax, the content of the wax is preferably 1 to 10 parts by mass per 100 parts by mass of the aqueous medium.

Before the start of the polymerization of the specific monomer used for production of the second fluorinated polymer, in view of more excellent effect of the present invention, the concentration of the fluorinated emulsifier is, to the total mass of the first fluorinated polymer in the aqueous dispersion X, preferably 100 mass ppm or less, more preferably 50 mass ppm or less, further preferably 25 mass ppm or less, particularly preferably 5 mass ppm or less. The lower limit may be 0 mass ppm.

A method of adjusting the concentration of the fluorinated emulsifier to be within the above range may be a method of producing the aqueous dispersion X without using the fluorinated emulsifier. Specifically, a production method without using the fluorinated emulsifier at the time of polymerization for the first fluorinated polymer may be mentioned.

### (Method for producing aqueous dispersion X)

As an example of the method for producing the aqueous dispersion X used in the present production method, a method of polymerizing a monomer (preferably a monomer mixture containing TFE and PAVE) in an aqueous medium in the presence of a polymerization initiator in the absence of the emulsifier to obtain a material dispersion that contains the aqueous medium and the first fluorinated polymer, may be mentioned.

The first fluorinated polymer contained in the material dispersion is preferably dispersed in the form of particles in the aqueous medium.

The material dispersion thus obtained may be used as it is as the aqueous dispersion X, or, another aqueous medium may be added and the resulting dispersion may be used as the aqueous dispersion X. Otherwise, by solvent replacement, the first fluorinated polymer may be dispersed in another aqueous medium, and this dispersion may be used as the aqueous dispersion X.

Further, the above other component may be added to the material dispersion, and the resulting dispersion may be used as the aqueous dispersion X.

The polymerization initiator used for polymerization for the first fluorinated polymer is preferably a water-soluble polymerization initiator, more preferably a persulfate such as ammonium persulfate, sodium persulfate or potassium persulfate, or an organic polymerization initiator such as disuccinic peroxide or azobisisobutylamidine dihydrochloride, more preferably a persulfate, particularly preferably ammonium persulfate.

A water soluble redox catalyst to be described below is also preferred.

The aqueous medium used for polymerization for the first fluorinated polymer may be water or a solvent mixture of water and a water-soluble organic solvent.

Specific examples of the water-soluble organic solvent are as described above.

The content of the first fluorinated polymer contained in the material dispersion is, to the total mass of the aqueous medium in the material dispersion, preferably 0.01 to 30 mass%, more preferably 0.01 to 10 mass%, further preferably 0.01 to 1 mass%.

The content of the aqueous medium contained in the material dispersion is, to the total mass of the material dispersion, preferably 60 to 99.9 mass%, more preferably 80 to 99.9 mass%, further preferably 98 to 99.9 mass%.

The method for producing the aqueous dispersion X used in the present production method preferably has, after the material dispersion is obtained, a step of bringing the obtained material dispersion into contact with an anion exchange resin. By this step, the material dispersion is purified and a purified material dispersion is obtained.

Via this step, the total concentration of fluoride ions, sulfate ions and chloride ions and the total concentration of the other anions in the aqueous dispersion X used in the present production method can readily be adjusted to the above ranges.

The anion exchange resin is considered to be preferably an anion exchange resin which is less decomposable by a peroxide (for example the polymerization initiator used for production of the first fluorinated polymer). It is considered that by using an anion exchange resin which is less decomposable by a peroxide, inclusion of the other anions derived from the anion exchange resin into the aqueous dispersion X can further be suppressed.

The anion exchange resin may be commercially available, and as the anion exchange resin which is less decomposable by a peroxide, AmberLite (registered trademark) HPR4200 Cl (manufactured by DuPont), DIAION (registered trademark) SA10AOH (manufactured by Mitsubishi Chemical Corporation) may, for example, be mentioned.

The ion exchange group of the anion exchange resin is preferably a trialkylammonium group, in view of more excellent effect of the present invention.

The amount of the anion exchange resin used is preferably 0.1 to 20 parts by mass, more preferably 0.2 to 10 parts by mass, per 100 parts by mass of the material dispersion used.

As a specific method of bringing the material dispersion and the anion exchange resin into contact with each other, a method of mixing the material dispersion with the anion exchange resin, or a method of passing the material dispersion through a column packed with the anion exchange resin may be mentioned.

When the anion exchange resin and the material dispersion are brought into contact with each other, the temperature of the material dispersion is preferably 0 to 80°C, more preferably 10 to 50°C.

In a case where the material dispersion and the anion exchange resin are mixed, the contact time of the anion exchange resin and the material dispersion is preferably 10 to 120 minutes, more preferably 30 to 90 minutes.

In a case where the material dispersion is passed through a column packed with the anion exchange resin, the flow rate is preferably 10 to 60 BV/h, more preferably 15 to 40 BV/h.

The method for producing the aqueous dispersion X used for the present production method preferably has, after the material dispersion is obtained, a step of bringing the obtained material dispersion into contact with a cation exchange resin. By this step, the total concentration of cations in the aqueous dispersion X used in the present production method can readily be adjusted to be within the above range.

The ion exchange group of the cation exchange resin is preferably a sulfonic acid group, whereby the total concentration of the cations can more readily be within the above range.

The cation exchange resin may be commercially available, and Dowex Monosphere 650C manufactured by Dupont may, for example, be mentioned.

The amount of the cation exchange resin used is preferably 0.05 to 20 parts by mass, more preferably 0.1 to 10 parts by mass, per 100 parts by mass of the material dispersion used.

The specific example of the method of bringing the material dispersion and the cation exchange resin into contact with each other, is the same as the above-described method of bringing the material dispersion and the anion exchange resin into contact with each other.

When the cation exchange resin and the material dispersion are brought into contact with each other, the temperature of the material dispersion is preferably 0 to 80°C, more preferably 10 to 50°C.

The contact time of the cation exchange resin and the material dispersion is preferably 10 to 120 minutes, more preferably 30 to 90 minutes.

In a case where the material dispersion is passed through a column packed with the cation exchange resin, the flow rate is preferably 10 to 60 BV/h, more preferably 15 to 40 BV/h.

The method for producing the aqueous dispersion X used for the present production method preferably has, after the material dispersion is obtained, a heating step of heating the obtained material dispersion. By this step, the polymerization initiator present in the material dispersion is deactivated, and thus at the time of production of the second fluorinated polymer, the system is less likely to be influenced by the polymerization initiator used for the polymerization for the first fluorinated polymer. Resultingly, a high molecular weight second fluorinated polymer is likely to be obtained.

The heating temperature in the heating step is, with a view to further promoting deactivation of the polymerization initiator in the aqueous medium, preferably 70 to 100°C, more preferably 80 to 98°C, further preferably 85 to 95°C.

The method for producing the aqueous dispersion X used for the present production method may have a step of diluting the material dispersion or the purified material dispersion with an aqueous medium (for example water). In this step, other component such as a wax may be added together with the aqueous medium.

### <Specific monomer>

In the present production method, the specific monomer is used. The specific monomer contains a fluorinated monomer.

Specific examples of the fluorinated monomer include TFE, chlorotrifluoroethylene (hereinafter also referred to as "CTFE"), vinylidene fluoride (hereinafter also referred to as "VdF"), a fluoroalkyl ethylene (hereinafter also referred to as "FAE"), PAVE, and hexafluoropropylene. Two or more types of the fluorinated monomers may be used in combination.

Specific examples of FAE include CH₂=CH(CF₂)₂F, CH₂=CH(CF₂)₃F, CH₂=CH(CF₂)₄F (hereinafter also referred to as "C4OLF"), CH₂=CF(CF₂)₃H and CH₂=CF(CF₂)₄H, and C4OLF is preferred.

The PAVE may be the same as the PAVE in the above-described first fluorinated polymer, and the preferred embodiment is also the same.

In particular, the fluorinated monomer preferably contains at least one member selected from the group consisting of TFE, CTFE and VdF, preferably contains TFE, and it is more preferably TFE.

The amount of the fluorinated monomer used is preferably 97 to 100 mass%, more preferably 98 to 100 mass%, further preferably 99 to 100 mass%, to the total amount of the specific monomer used.

The amount of the fluorinated monomer used may be 10.0 to 100.0 mol% to the amount of the specific monomer used, and in this case, it is more preferably 30.0 to 70.0 mol%, further preferably 40.0 to 60.0 mol%.

The amount of the fluorinated monomer used may be 90.0 to 99.9 mol% to the amount of the specific monomer used, and when melt-moldability is important, it is preferably 95.0 to 99.0 mol%.

The specific monomer may contain a monomer other than the above-described monomer (hereinafter also referred to as "other monomer").

Specific examples of the other monomer include ethylene, propylene, vinyl chloride and vinylidene chloride, and ethylene is preferred. The other monomer may be used in combination of two or more types.

The amount of the other monomer used is, to the amount of the specific monomer used, preferably 10.0 to 70.0 mol%, more preferably 20.0 to 60.0 mol%, further preferably 30.0 to 50.0 mol%.

On the other hand, it is also preferred that the specific monomer contains no other monomer.

The amount of the specific monomer used is preferably 1 to 50 parts by mass, more preferably 1 to 40 parts by mass, further preferably 1 to 30 parts by mass, per 100 parts by mass of the amount of the aqueous medium contained in the aqueous dispersion X, used.

### <Polymerization initiator>

In the present production method, the specific monomer is polymerized preferably in the presence of the polymerization initiator.

The polymerization initiator is preferably an oil-soluble radical initiator, a water-soluble radical initiator or a water-soluble redox catalyst.

Specific examples of the oil-soluble radical initiator include oil-soluble organic peroxides such as tert-butyl peroxypivalate (hereinafter also referred to as "PBPV") and diisopropyl peroxydicarbonate (hereinafter also referred to as "IPP").

Specific examples of the water-soluble radical initiator include water-soluble organic peroxides such as persulfates including ammonium persulfate, potassium persulfate, etc., disuccinic peroxide, bisglutaric peroxide and tert-butyl hydroperoxide (hereinafter also referred to as "TBHP").

The water-soluble redox catalyst is preferably a combination of an oxidizing agent such as bromic acid or its salt, chloric acid or its salt, persulfuric acid or its salt, permanganic acid or its salt, or hydrogen peroxide, and a reducing agent such as sulfurous acid or its salt, hydrogensulfite or its salt, thiosulfuric acid or its salt, an organic salt or an inorganic salt. The persulfate is preferably potassium persulfate of ammonium persulfate. The sulfite is preferably sodium sulfite. The inorganic salt is a combination of sulfate anion, sulfite anion or chloride anion and metal element. The metal element is preferably a transition metal, such as manganese, iron, cobalt, nickel, copper, zinc, cerium or silver, and is particularly preferably iron. The inorganic salt is preferably iron(II) sulfate.

The polymerization initiator is preferably the oil-soluble radical initiator or the water-soluble radical initiator, more preferably the oil-soluble radical initiator, further preferably the oil-soluble organic peroxide, whereby the fluorinated polymer can be produced more efficiently.

The polymerization initiator may be used in combination of two or more types.

The amount of the polymerization initiator used is preferably 1 to 1000 mass ppm, more preferably 5 to 750 mass ppm, further preferably 10 to 500 mass ppm per 100 parts by mass of the specific monomer used.

### <Other component>

At the time of polymerization of the specific monomer, a component other than the above components (hereinafter also referred to as "other component") may further be used. Specific examples of the other component include a reducing agent.

The amount of the other component used is preferably 1 to 2000 mass ppm per 100 parts by mass of the specific monomer used.

### <Process>

In the present production method, the specific monomer is polymerized in the aqueous dispersion X to produce the second fluorinated polymer.

The second fluorinated polymer obtained by the present production method contains units based on the fluorinated monomer, preferably contains unis based on TFE (hereinafter also referred to as "TFE units"), and is more preferably a TFE homopolymer (polytetrafluoroethylene, hereinafter also referred to as "PTFE").

The first fluorinated polymer and the second fluorinated polymer may be copolymerized.

The content of the units based on the fluorinated monomer (particularly TFE units) is preferably 99.0 to 100.0 mass%, more preferably 99.5 to 100.0 mass%, further preferably 99.9 to 100.0 mass%, to all units of the second fluorinated polymer.

In the present production method, the respective components may be added all at once or in divided portions. The order of addition of the components is not particularly limited.

The specific monomer is charged to a reaction system (that is a polymerization reactor) by a conventional method. For example, the specific monomer may be charged to the reaction system continuously or intermittently so as to keep a predetermined polymerization pressure. Otherwise, the specific monomer may be dissolved in an aqueous medium, and the resulting solution is charged to the reaction system continuously or intermittently.

In a case where the polymerization initiator is used, it may be added to the reaction system all at once, or in divided portions.

The polymerization temperature is preferably 10 to 95°C, more preferably 15 to 90°C.

The polymerization pressure is preferably 0.5 to 4.0 MPaG, more preferably 0.6 to 3.5 MPaG.

The polymerization time is preferably 90 to 1000 minutes, more preferably 90 to 700 minutes in the case of batch process.

According to the present production method, the second fluorinated polymer can be produced without using an emulsifier while an aqueous medium with a small environment burden is used. Accordingly, the polymerization of the specific monomer is conducted preferably substantially in the absence of an emulsifier.

The emulsifier may be the above-described fluorinated emulsifier or emulsifier other than the fluorinated emulsifier.

"Substantially in the absence of an emulsifier" means an environment in which the content of the emulsifier is 0.03 mass ppm or less to the total mass of the aqueous medium contained in the aqueous dispersion X, preferably 0.02 mass ppm or less, more preferably 0 mass ppm.

As described above, it is estimated that the specific monomer is polymerized in the particles of the first fluorinated polymer at the time of polymerization of the specific monomer, and thus it is considered that particles containing the first fluorinated polymer and the second fluorinated polymer are formed by the present production method. That is, it is estimated that according to the present production method, the second fluorinated polymer is obtained in the form of particles containing the first fluorinated polymer and the second fluorinated polymer. In this case, by the present production method, a second aqueous dispersion that has the particles containing the first fluorinated polymer and the second fluorinated polymer dispersed in the aqueous medium is obtained.

### [Second aqueous dispersion]

The second aqueous dispersion contains the aqueous medium and the second fluorinated polymer obtained by the present production method, and may further contain the first fluorinated polymer separately from the second fluorinated polymer.

### <Aqueous medium>

The aqueous medium is the same as the specific examples of the aqueous medium used for production of the second fluorinated polymer.

The content of the aqueous medium is, to the total mass of the present aqueous dispersion, preferably 50 to 99 mass%, more preferably 60 to 99 mass%, further preferably 70 to 99 mass%, in view of dispersion stability of the particles containing the second fluorinated polymer.

### <First fluorinated polymer and second fluorinated polymer>

The present aqueous dispersion may contain the first fluorinated polymer. The first fluorinated polymer is the same as the first fluorinated polymer in the present production method described above, and the preferred embodiment is also the same.

In a case where the present aqueous dispersion contains the first fluorinated polymer, the content of the first fluorinated polymer is preferably 0.01 to 10.0 mass%, more preferably 0.01 to 5.0 mass%, further preferably 0.01 to 1.0 mass%, to the total mass of the present aqueous dispersion.

The second fluorinated polymer is the same as the second fluorinated polymer in the present production method described above, and the preferred embodiment is also the same.

The content of the second fluorinated polymer is preferably 5 to 50 mass%, more preferably 8 to 40 mass%, further preferably 10 to 35 mass% to the total mass of the present aqueous dispersion.

In a case where the second aqueous dispersion contains the first fluorinated polymer, the total content of the first fluorinated polymer and the second fluorinated polymer is preferably 5 to 50 mass%, more preferably 8 to 40 mass%, further preferably 10 to 35 mass% to the total mass of the present aqueous dispersion.

In a case where the second aqueous dispersion contains the first fluorinated polymer, the first fluorinated polymer and the second fluorinated polymer may be present separately in the present aqueous dispersion, however, they are present preferably in the form of particles containing the first fluorinated polymer and the second fluorinated polymer.

In such a case, the average particle size of the particles is preferably 500 µm or less, more preferably 450 µm or less, further preferably 400 µm or less, in view of dispersion stability.

Further, the average particle size of the particles is preferably 50 nm or more, more preferably 80 nm or more, further preferably 100 nm or more, in view of agglomeration property.

The average particle size of the particles is a particle size at which the cumulative volume is 50% on a cumulative curve obtained by measuring the particle size distribution by laser diffraction/scattering method and taking the whole volume of the group of particles to be 100%.

### <Others>

The second aqueous dispersion preferably contains substantially no emulsifier. The emulsifier may be the above fluorinated emulsifier or an emulsifier other than the fluorinated emulsifier.

"The present aqueous dispersion contains substantially no emulsifier" means a content of the emulsifier of 0.03 mass ppm or less to the total mass of the present aqueous dispersion, preferably 0.02 mass ppm or less, more preferably 0 mass ppm. The content of 0 mass ppm means that no emulsifier is used.

### <Cation in second aqueous dispersion>

The total concentration of the cations contained in the second aqueous dispersion is 2 mass ppm or less to the total mass of the aqueous medium in the aqueous dispersion, and with a view to obtaining a higher molecular weight fluorinated polymer, preferably 1 mass ppm or less, more preferably 0.1 mass ppm or less. The lower limit may be 0 mass ppm.

An example of a method of adjusting the total concentration of the cations contained in the aqueous dispersion to be the above range may be production using the aqueous dispersion X having a cation concentration within a preferred range.

The total concentration of the cations contained in the aqueous dispersion is obtained by precipitating the fluorinated polymer in the aqueous dispersion, subjecting the supernatant to ion chromatography, and converting the total area of peaks of the cations detected, using an analytical curve showing the relation between the ammonium ion peak area and amount. The measurement method will be described in detail in EXAMPLES.

### <Application>

The present aqueous dispersion, which does not requires the emulsifier as described above, can easily be formed into a dispersion the medium of which is an organic solvent such as N-methyl pyrrolidone or acetone by solvent replacement.

For example, the present aqueous dispersion may be mixed with an organic solvent and dehydrated by evaporation or over anhydrous sodium sulfate, to be formed into a dispersion the medium of which is the organic solvent.

The second aqueous dispersion is capable of stably dispersing the fluorinated polymer even without containing the emulsifier. Thus, the second aqueous dispersion is suitably used for e.g. coating application, binder application.

A powder of the first fluorinated polymer and the second fluorinated polymer can be obtained by agglomerating the first fluorinated polymer and the second fluorinated polymer (preferably particles containing the first fluorinated polymer and the second fluorinated polymer) from the second aqueous dispersion.

The agglomeration method may be mechanical agglomeration, freeze agglomeration, acid agglomeration, base agglomeration or agglomeration using a coagulant, but is not limited thereto.

The mechanical agglomeration may, for example, be a method of diluting the present aqueous dispersion with water so that the concentration of the first fluorinated polymer and the second fluorinated polymer in the present aqueous dispersion would be 8 to 20 mass% and then applying shear force e.g. by vigorous stirring to agglomerate primary particles of the first fluorinated polymer and the second fluorinated polymer. As the case requires, the pH of the second aqueous dispersion may be adjusted, and an agglomeration aid such as an electrolyte or a water-soluble organic solvent may be added. The pH adjusting agent may be sodium carbonate or sodium hydrogen carbonate. The mechanical agglomeration may be conducted in the presence of at least one compound selected from the group consisting of ammonia, ammonium salt and urea. The electrolyte may be an inorganic salt such as potassium nitrate, sodium nitrate, sodium carbonate or sodium hydrogen carbonate. The organic solvent may, for example, be an alcohol or acetone.

In the case of freeze agglomeration, the agglomeration temperature is preferably - 20 to 0°C. The agglomeration time is preferably 1 hour or more, more preferably 2 hours or more.

In the case of acid agglomeration, preferred is a method of adding a solution containing an acid to the present aqueous dispersion. The acid to be added may, for example, be hydrochloric acid, nitric acid, sulfuric acid, oxalic acid or hydrofluoric acid, and is preferably hydrochloric acid. The concentration of the acid in the solution containing the acid is preferably 0.1 to 50 mass%, more preferably 1 to 30 mass%, further preferably 1 to 10 mass%.

Base agglomeration is preferably a method of adding a solution containing a base to the present aqueous dispersion. The base to be added may, for example, be sodium hydroxide, potassium hydroxide or ammonium carbonate, and is preferably sodium hydroxide. The concentration of the base in the solution containing the base is preferably 0.1 to 50 mass%, more preferably 1 to 30 mass%, further preferably 1 to 10 mass%.

For agglomeration by a coagulant, a conventional coagulant may be used. The conventional coagulant may, for example, be an aluminum salt, a calcium salt or a magnesium salt. Specifically, it may, for example, be aluminum sulfate, alum represented by the formula M'Al(SO₄)₂·12H₂O (wherein M' is a monovalent cation other than lithium), calcium nitrate or magnesium sulfate, preferably alum, more preferably potassium alum wherein M is potassium.

The agglomeration method is preferably the mechanical agglomeration or the base agglomeration, whereby the agglomeration is particularly likely to proceed.

### [Solid composition]

The solid composition of the present invention (hereinafter also referred to as "the present solid composition") contains the second fluorinated polymer and may further contain the first fluorinated polymer.

In this specification, the solid composition means a composition having a solid content mass of 99 mass% or more.

The solid content mass is calculated by the following method based on the mass before and after heating.

2.0 g of the solid composition is heated at 170°C for 20 minutes, the mass of the residue is weighed, and the solid content mass is calculated in accordance with the following formula.$Solid content mass \left(mass%\right) = 100 \times \left(mass of residue\right) / \left(mass of solid composition\right)$

The present solid composition can be obtained from the second aqueous dispersion. Specifically, the present solid composition is obtained preferably by agglomeration using the above present aqueous dispersion. The preferred embodiment of the present solid composition is the same as the preferred embodiments of the first fluorinated polymer and the second fluorinated polymer contained in the present aqueous dispersion, and its description is omitted.

In a case where the present solid composition contains the first fluorinated polymer, the first fluorinated polymer and the second fluorinated polymer may be present in the present solid composition separately but are present preferably in the form of particles containing the first fluorinated polymer and the second fluorinated polymer.

In a case where the present solid composition contains the first fluorinated polymer, the content of the first fluorinated polymer is preferably 0.01 to 50 mass%, more preferably 0.1 to 30 mass%, further preferably 0.3 to 25 mass% to the total mass of the present solid composition.

The content of the second fluorinated polymer is preferably 50 to 100 mass%, more preferably 70 to 100 mass%, further preferably 75 to 100 mass% to the total mass of the present solid composition.

In a case where the present solid composition contains the first fluorinated polymer, the total content of the first fluorinated polymer and the second fluorinated polymer is preferably 98 to 100 mass%, more preferably 99 to 100 mass% to the total mass of the present solid composition.

### <Cation content in solid composition>

The content of the cations contained in the present solid composition is 2 mass ppm or less to the total mass of the solid composition, and with a view to obtaining a higher molecular weight fluorinated polymer, more preferably 1 mass ppm or less. The lower limit may be 0 mass ppm. An example of the method of adjusting the total concentration of the cations contained in the solid composition to the above values may be production using the aqueous dispersion X having a cation concentration within a preferred range.

The total concentration of the cations contained in the solid composition is calculated from the total area of peaks of the cations detected in measurement of an extract of the solid composition by ion chromatography, using an analytical curve showing the relation between the ammonium ion peak area and amount. The extract is obtained by adding water to the solid composition, conducting ultrasonic treatment, conducting centrifugal separation to precipitate the fluorinated polymer, and subjecting the supernatant to extraction. The measurement method will be described in detail in EXAMPLES.

### <Total content of metal element in solid composition >

The total content of the metal elements contained in the present solid composition is 2 mass ppm or less to the total mass of the solid composition, and with a view to obtaining a higher molecular weight fluorinated polymer, more preferably 1 mass ppm or less. The lower limit may be 0 mass ppm. An example of the method of adjusting the total concentration of the metal element contained in the solid composition to be the above value may be production using the aqueous dispersion X having a total content of the metal elements within a preferred range.

The total content of the metal elements contained in the solid composition is obtained by incinerating the solid composition, subjecting the ash to extraction with an aqueous sulfuric acid solution, and subjecting the extract to ICP-MS measurement. The measurement method will be described in detail in EXAMPLES.

### <DSC endothermic peak ratio >

The present solid composition, obtained by agglomeration from the present aqueous dispersion, is preferably as follows. That is, the present solid composition, without heat history to a temperature of 300°C or higher, is heated by a scanning differential thermal analyzer, in an air atmosphere, to 380°C at a rate of 10°C/min to obtain a differential thermal analysis curve. The length from the largest endothermic peak present at 340°C or higher on the differential thermal analysis curve to the base line, is taken as the endothermic peak height A (hereinafter also referred to as "A") and the length from a point on the base line, lower by 10°C than the intersection with the line drawn from the maximum point, to the differential thermal analysis curve, is taken as the endothermic peak height B (hereinafter also referred to as "B"). In this case, the ratio of the DSC endothermic peak height B/A is preferably 0.740 or less. With a view to obtaining a higher molecular weight fluorinated polymer, it is more preferably 0.700 or less, further preferably 0.500 or less.

The DSC endothermic peak ratio is an index corresponding to the molecular weight of the fluorinated polymer, and a lower ratio indicates a higher proportion of a highly crystalline polymer having a high melting point, that is a higher molecular weight of the fluorinated polymer. Absence of a peak at 340°C or higher indicates a low molecular weight of the fluorinated polymer.

### EXAMPLES

Now, the present invention will be described in further detail with reference to Examples. Ex. 1-1, 2-1 and 2-2 are Examples of the present invention, and Ex. 1-2, 2-3 and 2-4 are Comparative Examples. However, it should be understood that the present invention is by no means restricted thereto.

### [Measurement and evaluation methods]

The measurement methods and evaluation methods are as follows.

### <Glass transition temperature (Tg)>

Tg was measured using NEXTA DSC600 manufactured by Hitachi High-Tech Corporation. Specifically, 5 mg of a measurement sample was weighed on an aluminum sample pan, and in a nitrogen atmosphere, the sample was heated to 100°C at a heating rate of 10°C/min. Then, the sample was cooled to -60°C at a rate of 10°C/min. After the sample reached the predetermined temperature, it was heated again to 100°C at a rate of 10°C/min. Tg was estimated from the inflection point confirmed in the second heating step.

### <Average particle size of particles in aqueous dispersion>

Measured by using a laser diffraction/scattering particle size distribution measuring apparatus (ELSZneo manufactured by Otsuka Electronics Co., Ltd.),

### <Ratios of units in polymer>

The ratios of the units in the polymer were obtained by ¹⁹F-NMR analysis and infrared absorption analysis.

### <Concentration of anion>

The concentration of anions to the total mass of the aqueous medium in the aqueous dispersion was measured as follows. The material dispersion was freeze-agglomerated and subjected to filtration, and the obtained aqueous medium was analyzed by ion chromatography.

The analysis by ion chromatography was conducted by ion chromatograph (Thermo Fisher Scientific, ICS-5000). AS-19 was used for the separation column, and an aqueous potassium hydroxide solution was used for the eluant. The concentration of the anions to the total mass of the aqueous medium in the aqueous dispersion was calculated from the concentration of the anions in the material dispersion and the mass ratio of the material dispersion and the aqueous dispersion.

The concentrations of sulfate ions, chloride ions and fluoride ions were obtained from the integrated peak values from analytical curves for the respective substances prepared. The concentrations of the respective ions were summed to calculate the total concentration of the sulfate ions, the chloride ions and the fluoride ions (the specific anions) to the total mass of the aqueous medium in the aqueous dispersion.

### (Analytical curves for sulfate ions, chloride ions and fluoride ions)

Aqueous solutions containing sulfate ions, chloride ions and fluoride ions having known concentrations of 0.01 to 1 mass ppm were prepared, each at 4 concentrations, and subjected to measurement by an ion chromatograph. From the respective sample concentrations and the integrated peak areas, by first-order approximation, a was obtained from the following formula (1). The quantitative determination limit was 0.01 mass ppm. $Y 1 = a \times X 1$ (1)
Y1: peak area of each anion
X1: concentration (mass ppm) of each anion

The total concentration of anions other than the sulfate ions, the chloride ions and the fluoride ions (the other anions) was determined by preparing an analytical curve for trifluoroacetate ions and converting the peak integrated values to equivalent concentrations of trifluoroacetate ions.

### (Analytical curve for trifluoroacetate ions)

Aqueous solutions containing trifluoroacetate ions having known concentrations of 0.1 to 5 mass ppm were prepared at 4 concentrations and subjected to measurement by an ion chromatograph. From the respective sample concentrations and the integrated peak areas, by first-order approximation, b was obtained from the following formula (2). The quantitative determination limit was 0.1 mass ppm. $Y 2 = b \times X 2$ (2)
Y2: peak area of trifluoroacetate ions
X2: concentration (mass ppm) of trifluoroacetate ions

### <Total concentration of cations>

The total concentration of cations to the total mass of the aqueous medium in the aqueous dispersion was measured as follows. The material dispersion was freeze-agglomerated and subjected to filtration, and the obtained aqueous medium was analyzed by ion chromatography.

The total concentration of cations to the total mass of the aqueous medium in the present aqueous dispersion was measured as follows. 6 mL of the material dispersion was subjected to centrifugal separation (8000 rpm, 10 minutes) to precipitate the fluorinated polymer, and the supernatant as the extract was analyzed by ion chromatography.

The total concentration of cations to the total mass of the solid composition was measured as follows. 5 mL of ultrapure water was added to 2.5 g of the solid composition, the mixture was subjected to ultrasonic treatment at 50°C for 2 hours and subjected to centrifugal separation (5000 rpm, 5 minutes) to precipitate the fluorinated polymer, and the supernatant as an extract was analyzed by ion chromatography.

The analysis by ion chromatography was conducted by an ion chromatograph (manufactured by Shimadzu Corporation, HIC-SP). Shim-pack IC-C4 was used for the separation column, and an aqueous oxalic acid solution was used for the eluant. The total concentration of cations to the total mass of the aqueous medium in the aqueous dispersion was calculated from the concentration of cations in the material dispersion and the mass ratio of the material dispersion and the aqueous dispersion.

The total concentration of cations was obtained by preparing an analytical curve for ammonium ions and converting the peak integrated values to equivalent concentrations of ammonium ions.

### (Analytical curve for ammonium ions)

Aqueous solutions containing ammonium ions having known concentrations of 0.1 to 10 mass ppm were prepared at 4 concentrations and subjected to measurement by an ion chromatograph. From the respective sample concentrations and the integrated peak areas, by first-order approximation, c was obtained from the following formula (3). The quantitative determination limit was 0.1 mass ppm. $Y 3 = c \times X 3$ (3)
Y3: peak area of ammonium ions
X3: concentration (mass ppm) of ammonium ions

### <Metal element in aqueous dispersion>

The total content of metal elements to the total mass of the aqueous medium in the aqueous dispersion X was measured as follows. The material dispersion was freeze agglomerated and subjected to filtration, and the obtained aqueous medium was diluted with hydrochloric acid and analyzed by ICP-AES (manufactured by Agilent Technologies, 720-ES).

### <Content of metal element in solid composition >

The total content of metal elements in the solid composition was measured as follows. 0.1 g of the solid composition was weighed in a platinum boat and incinerated in an oxygen atmosphere at 600°C for 10 minutes.

The obtained ash was dissolved in diluted hydrochloric acid to 20 mL. With respect to the solution, the metal elements were measured by ICP-MS (manufactured by Agilent Technologies, Agilent7700x) and quantitatively determined by external calibration method.

The metal elements to be measured are 29 metal elements (Li, Be, Na, Mg, Al, K, Ca, Ti, V, Cr, Mn, Fe, Co, Ni, Cu, Zn, Ga, Rb, Sr, Zr, Mo, Ag, Cd, In, Sn, Cs, Ba, Pb and Bi).

### <Melting point>

The melting point was obtained from an endothermic peak obtained by heating a sample by a scanning differential thermal analyzer (manufactured by SII, DSC7200) in an air atmosphere to 380°C at a rate of 10°C/min. In a case where there were a plurality of endothermic peaks, the largest endothermic peak was employed for the peak temperature.

### <DSC endothermic peak ratio >

A sample was heated by a scanning differential thermal analyzer (manufactured by SII, DSC7200) in an air atmosphere to 380°C at a rate of 10°C/min to obtain a differential thermal analysis curve. The length from the largest endothermic peak present at 340°C or higher on the differential thermal analysis curve to the base line, is taken as A. The length from a point on the base line, lower by 10°C than the intersection with the line drawn from the maximum point, to the differential thermal analysis curve is taken as B. The B/A value was defined as the DSC endothermic peak ratio.

### [Production of material dispersion A]

In a 60.5 L stainless steel pressure resistant reactor, ultrapure water (33 kg) and PMVE (2.1 kg) were charged and heated to 90°C with stirring at 170 rpm. Then, TFE (210 g) and an aqueous ammonium persulfate solution (5.6 mass%, 150 g) were added to initiate the polymerization. Since the pressure in the reactor decreased as the polymerization started, TFE was added to keep a constant pressure. When the amount of TFE injected reached 120 g, the reactor was cooled to terminate the polymerization. The obtained liquid was taken as material dispersion A. The material dispersion A contained fluorinated polymer 1A.

The material dispersion A was freeze-agglomerated and subjected to filtration, and the obtained fluorinated polymer 1A was analyzed by NMR and as a result, TFE units/PMVE units=52/48 (molar ratio), and Tg was -5°C.

### [Production of material dispersion B]

Into a 60.5 L stainless steel pressure resistant reactor, ultrapure water (33 kg) and PMVE (2.1 kg) were charged and heated to 90°C with stirring at 170 rpm. TFE (210 g) and an aqueous ammonium persulfate solution (5.6 mass%, 150 g) were added to initiate the polymerization. Since the pressure in the reactor decreased as the polymerization started, TFE was added to keep a constant pressure. When the amount of TFE injected reached 120 g, the reactor was cooled to terminate the polymerization.

The gas remaining in the reactor was recovered, and the reactor was heated to 90°C, followed by stirring at 20 rpm for 3 hours. Then, the reactor was cooled and the liquid was withdrawn. This liquid was taken as material dispersion B. The material dispersion B contained fluorinated polymer 1B.

The material dispersion B was freeze-agglomerated and subjected to filtration, and the obtained fluorinated polymer 1B was analyzed by NMR and as a result, TFE units/PMVE units=52/48 (molar ratio), and Tg was -5°C.

### [Production of anion exchange resin 1]

To an anion exchange resin AmberLite HPR4200 Cl (manufactured by DuPont, 50 g), an aqueous sodium hydroxide solution (8 mass%, 100 g) was added and stirred. 60 minutes after the start of the stirring, the mixture was subjected to filtration to obtain anion exchange resin 1.

### [Ex. 1-1]

To the material dispersion A (490 g), a cation exchange resin Dowex Monosphere 650C (manufactured by DuPont, 20 g) was added. 60 minutes after the start of stirring, the mixture was subjected to filtration to separate the material dispersion from the ion exchange resin. To the collected material dispersion, the anion exchange resin 1 (20 g) was added. 60 minutes after the start of stirring, the mixture was subjected to filtration to separate the material dispersion from the ion exchange resin to obtain material dispersion A-1 (corresponding to the purified material dispersion). The material dispersion A-1 had particles of the fluorinated polymer 1A dispersed in the aqueous medium, and had a content of the fluorinated polymer 1A of 0.5 mass% to the total mass of the material dispersion A-1.

In a 1.0 L stainless steel pressure resistant reactor, paraffin wax (28 g), ultrapure water (121 g) and the material dispersion A-1 (475 g) were charged to obtain aqueous dispersion A-11(corresponding to the aqueous dispersion X).

In accordance with the above-described "<Concentration of anion>", "<Concentration of cation>" and "<Metal element in aqueous dispersion>", using the material dispersion A-1, the total concentration of the specific anions, the total concentration of the other anions, the total concentration of cations and the metal element content were obtained. Based on the obtained values, the total concentration of the specific anions, the total concentration of the other anions, the total concentration of cations and the metal element content, to the aqueous medium in the aqueous dispersion A-11, were calculated. The results are shown in the following Table.

The content of the fluorinated polymer 1A was 0.4 mass% to the total mass of the aqueous dispersion A-11.

The concentration of the fluorinated emulsifier was 0 mass ppm to the total mass of the fluorinated polymer 1A in the aqueous dispersion A-11.

The aqueous dispersion A-11 was heated to 70°C and stirred at 260 rpm. TFE was injected until the pressure in the reactor reached 1.4 MPaG, and disuccinic peroxide (0.17 mmol) was added to initiate the polymerization. Since the pressure in the reactor decreased as the polymerization started, TFE was added to keep a constant pressure. When the amount of TFE injected reached 90 g, the reactor was cooled to terminate the polymerization. The polymerization time was 194 minutes, and the polymerization rate calculated from the TFE consumption was 47 g/L/h.

The gas remaining in the reactor was recovered, and the liquid was withdrawn. The liquid was taken as aqueous dispersion 1-1 (corresponding to the second aqueous dispersion). The aqueous dispersion 1-1 was a dispersion that had particles (average particle size: 237 nm) containing the fluorinated polymer 1A and fluorinated polymer 2A dispersed in the aqueous medium, and had a solid content concentration of 13 mass%. In accordance with the above-described "<Concentration of cation in aqueous dispersion>", the total concentration of cations was obtained by using the obtained aqueous dispersion 1-1. Based on the obtained value, the total concentration of cations to the aqueous medium in the aqueous dispersion 1-1 was calculated. The results are shown in the following Table. The same applied hereinafter.

Based on the amount of the aqueous medium in the aqueous dispersion A-11 used for polymerization being 100 parts by mass, the amount of the monomer (TFE) used for the polymerization was 14 parts by mass.

The solid composition was obtained by agglomerating particles in the obtained aqueous dispersion 1-1 and collecting them by filtration. The solid composition dried at 120°C had a melting point of 343.9°C and a DSC endothermic peak ratio B/A of 0.465. In accordance with the above-described "<Cation content in solid composition>" and "<Metal element in solid composition>", using the obtained solid composition, the total concentration of cations and the metal element content were determined. The results are shown in the following Table. The same applies hereinafter.

### [Ex. 1-2]

Material dispersion A-2 was obtained in the same manner as in Ex. 1 except that the anion exchange resin was changed to A300OH manufactured by Purolite. The material dispersion A-2 had particles of the fluorinated polymer 1A dispersed in the aqueous medium, and had a content of the fluorinated polymer 1A of 0. 5 mass% to the total mass of the material dispersion A-2.

Into a 1.0 L stainless steel pressure resistant reactor, paraffin wax (28 g), ultrapure water (121 g) and the material dispersion A-2 (475 g) were charged to obtain aqueous dispersion A-12.

In the same manner as in Ex. 1-1 except that the material dispersion A-2 was used, the total concentration of the specific anions, the total concentration of the other anions and the total concentration of cations, to the aqueous medium in the aqueous dispersion A-12, were calculated. The results are shown in the following Table.

The aqueous dispersion A-12 was heated to 70°C and stirred at 260 rpm. TFE was injected until the pressure in the reactor reached 1.4 MPaG, and disuccinic peroxide (0.17 mmol) was added to initiate the polymerization. Since the pressure in the reactor decreased as the polymerization started, TFE was injected to keep the pressure. When the amount of TFE injected reached 90 g, the reactor was cooled to terminate the polymerization. The polymerization time was 227 minutes, and the polymerization rate calculated from the TFE consumption was 40 g/L/h.

The gas remaining in the reactor was recovered, and the liquid was withdrawn. This liquid was taken as aqueous dispersion 1-2. The aqueous dispersion 1-2 was a dispersion that had particles (average particle size: 227 nm) containing the fluorinated polymer 1A and the fluorinated polymer 2B dispersed in the aqueous medium, and had a solid content concentration of 11 mass%.

The particles in the aqueous dispersion 1-2 obtained were agglomerated and collected by filtration to obtain solid composition. The solid composition dried at 120°C had a melting point of 338.0°C, and its DSC endothermic peak ratio B/A could not be measured.

| Table 1 | | | |
|---|---|---|---|
| | | Ex. 1-1 | Ex. 1-2 |
| Material dispersion | Type of material dispersion (before contact with ion exchange resin) | Material dispersion A | Material dispersion A |
| | Type of material dispersion (purified material dispersion) (after contact with ion exchange resin) | Material dispersion A-1 | Material dispersion A-2 |
| | Type of cation exchange resin | Dowex Monosphere 650C | |
| | Type of anion exchange resin | AmberLite HPR4200 Cl | Purolite A300OH |
| Aqueous dispersion obtained by using material dispersion (purified material dispersion) | Type | Aqueous dispersion A-11 | Aqueous dispersion A-12 |
| | Total concentration [ppm] of cations | Quantitative determination limit or less | Quantitative determination limit or less |
| | Total content [ppm] of metal elements | <1 | <1 |
| | Total concentration [ppm] of specific anions | 1 | 1 |
| | Total concentration [ppm] of other anions | 0.5 | 10 |
| Conditions for production of aqueous dispersion containing fluorinated polymer 2 | Initiator concentration [mmol] | 0.17 | 0.17 |
| | TFE injection amount [g] | 90 | 90 |
| | Polymerization time [min] | 194 | 227 |
| | Polymerization rate [g/L/h] | 47 | 40 |
| Aqueous dispersion containing fluorinated polymer 2 | Type | Aqueous dispersion 1-1 | Aqueous dispersion 1-2 |
| | Solid content concentration [%] | 13 | 11 |
| | Particle size [nm] | 237 | 227 |
| | Total concentration [ppm] of cations | Quantitative determination limit or less | Quantitative determination limit or less |
| | Melting point [°C] | 343.9 | 338.0 |
| | DSC endothermic peak ratio B/A | 0.465 | Measurement impossible |
| Solid composition | Total concentration [ppm] of cations | Quantitative determination limit or less | Quantitative determination limit or less |
| | Total content [ppm] of metal elements | <1 | <1 |

As evident from Table 1, it was shown that when aqueous dispersions containing fluorinated polymer 2 (the second fluorinated polymer) were produced at the same initiator concentration and TFE injection amount, the fluorinated polymer obtained by the method for producing a fluorinated polymer of the present invention (Ex. 1-1) had a higher molecular weight from the DSC endothermic peak ratio.

### [Ex. 2-1]

Material dispersion B-1 (corresponding to the purified material dispersion) was obtained in the same manner as in Ex. 1-1 except that the material dispersion A was changed to the material dispersion B. The material dispersion B-1 had particles of the fluorinated polymer 1B dispersed in the aqueous medium, and had a content of the fluorinated polymer 1B of 0.5 mass% to the total mass of the material dispersion B-1.

In a 1.0 L stainless steel pressure resistant reactor, paraffin wax (28 g), ultrapure water (121 g) and the material dispersion B-1 (475 g) were charged to obtain aqueous dispersion B-11 (corresponding to the aqueous dispersion X).

In the same manner as in Ex. 1-1 except that the material dispersion B-1 was used, the total concentration of the specific anions, the total concentration of the other anions and the total concentration of cations, to the aqueous medium in the aqueous dispersion B-11, were calculated. The results are shown in the following Table.

The content of the fluorinated polymer 1B was 0.4 mass% to the total mass of the aqueous dispersion B-11.

The concentration of the fluorinated emulsifier was 0 mass ppm to the total mass of the fluorinated polymer 1B in the aqueous dispersion B-11.

The aqueous dispersion B-11 was heated to 70°C and stirred at 260 rpm. TFE was injected until the pressure in the reactor reached 1.4 MPaG, and disuccinic peroxide (0.10 mmol) was added to initiate the polymerization. Since the pressure in the reactor decreased as the polymerization started, TFE was added to keep a constant pressure. When the amount of TFE injected reached 120 g, the reactor was cooled to terminate the polymerization. The polymerization time was 429 minutes, and the polymerization rate calculated from the TFE consumption was 28 g/L/h.

The gas remaining in the reactor was recovered, and the liquid was withdrawn. This liquid was taken as aqueous dispersion 2-1 (corresponding to the second aqueous dispersion). The aqueous dispersion 2-1 was a dispersion that had particles (average particle size: 292 nm) containing the fluorinated polymer 1B and fluorinated polymer 2C dispersed in the aqueous medium, and had a solid content concentration of 19 mass%.

Based on the amount of the aqueous medium in the aqueous dispersion B-11 used for the polymerization being 100 parts by mass, the amount of the monomer (TFE) used for the polymerization was 19 parts by mass.

The particles in the aqueous dispersion 2-1 obtained were agglomerated and collected by filtration to obtain a solid composition. The solid composition dried at 120°C had a melting point of 343.9°C and a DSC endothermic peak ratio B/A of 0.462.

### [Ex. 2-2]

Material dispersion B-2 (corresponding to the purified material dispersion) was obtained in the same manner as in Ex. 2-1 except that the anion exchange resin was changed to DIAION SA10AOH manufactured by Mitsubishi Chemical Corporation. The material dispersion B-2 had particles of the fluorinated polymer 1B dispersed in the aqueous medium, and had a content of the fluorinated polymer 1B of 0.5 mass% to the total mass of the material dispersion B-2.

In a 1.0 L stainless steel pressure resistant reactor, paraffin wax (28 g), ultrapure water (121 g) and the material dispersion B-2 (475 g) were charged to obtain aqueous dispersion B-12 (corresponding to the aqueous dispersion X).

In the same manner as in Ex. 2-1 except that the material dispersion B-2 was used, the total concentration of the specific anions, the total concentration of the other anions and the total concentration of cations, to the aqueous medium in the aqueous dispersion B-12, were calculated. The results are shown in the following Table.

The content of the fluorinated polymer 1B was 0.4 mass% to the total mass of the aqueous dispersion B-12.

The concentration of the fluorinated emulsifier was 0 mass ppm to the total mass of the fluorinated polymer 1B in the aqueous dispersion B-12.

The aqueous dispersion B-12 was heated to 70°C and stirred at 260 rpm. TFE was injected until the pressure in the reactor reached 1.4 MPaG, and disuccinic peroxide (0.10 mmol) was added to initiate the polymerization. Since the pressure in the reactor decreased as the polymerization started, TFE was added to keep a constant pressure. When the amount of TFE injected reached 120 g, the reactor was cooled to terminate the polymerization. The polymerization time was 321 minutes, and the polymerization rate calculated from the TFE consumption was 38 g/L/h.

The gas remaining in the reactor was recovered, and the liquid was withdrawn. This liquid was taken as aqueous dispersion 2-2. The aqueous dispersion 2-2 was a dispersion that had particles (average particle size: 294 nm) containing the fluorinated polymer 1B and fluorinated polymer 2D dispersed in the aqueous medium, and had a solid content concentration of 18 mass%.

Based on the amount of the aqueous medium in the aqueous dispersion B-12 used for the polymerization being 100 parts by mass, the amount of the monomer (TFE) used for the polymerization was 19 parts by mass.

The particles in the aqueous dispersion 2-2 obtained were agglomerated and collected by filtration to obtain a solid composition. The solid composition dried at 120°C had a melting point of 344.2°C and a DSC endothermic peak ratio B/A of 0.383.

### [Ex. 2-3]

Material dispersion B-3 was obtained in the same manner as in Ex. 1-2 except that the material dispersion A was changed to the material dispersion B. The material dispersion B-3 had particles of the fluorinated polymer 1B dispersed in the aqueous medium, and had a content of the fluorinated polymer 1B of 0.5 mass% to the total mass of the material dispersion B-3.

Into a 1.0 L stainless steel pressure resistant reactor, paraffin wax (28 g), ultrapure water (121 g) and the material dispersion B-3 (475 g) were charged to obtain aqueous dispersion B-13.

In the same manner as in Ex. 2-1 except that the material dispersion B-3 was used, the total concentration of the specific anions, the total concentration of the other anions and the total concentration of cations, to the aqueous medium in the aqueous dispersion B-13, were calculated. The results are shown in the following Table.

The aqueous dispersion B-13 was heated to 70°C and stirred at 260 rpm. TFE was injected until the pressure in the reactor reached 1.4 MPaG, and disuccinic peroxide (0.10 mmol) was added to initiate the polymerization. Since the pressure in the reactor decreased as the polymerization started, TFE was added to keep a constant pressure. When the amount of TFE injected reached 120 g, the reactor was cooled to terminate the polymerization. The polymerization time was 370 minutes, and the polymerization rate calculated from the TFE consumption was 34 g/L/h.

The gas remaining in the reactor was recovered, and the liquid was withdrawn. This liquid was taken as aqueous dispersion 2-3. The aqueous dispersion 2-3 was a dispersion that had particles (average particle size: 302 nm) containing the fluorinated polymer 1B and fluorinated polymer 2E dispersed in the aqueous medium, and had a solid content concentration of 19 mass%.

The particles in the aqueous dispersion 2-3 obtained were agglomerated and collected by filtration to obtain a solid composition. The solid composition dried at 120°C had a melting point of 338.2°C, and the DSC endothermic peak ratio B/A could not be measured.

### [Ex. 2-4]

To the material dispersion B (490 g), DIAION SA10AOH manufactured by Mitsubishi Chemical Corporation (20 g) was added. 60 minutes after the start of stirring, the material dispersion was separated from the ion exchange resin to obtain material dispersion B-4 (corresponding to the purified material dispersion). The material dispersion B-4 had particles of the fluorinated polymer 1B dispersed in the aqueous medium, and had a content of the fluorinated polymer 1B of 0.5 mass% to the total mass of the material dispersion B-4.

In a 1.0 L stainless steel pressure resistant reactor, paraffin wax (28 g), ultrapure water (121 g) and the material dispersion B-4 (475 g) were charged to obtain aqueous dispersion B-14. In the same manner as in Ex. 2-1 except that the material dispersion B-4 was used, the total concentration of the specific anions, the total concentration of the other anions and the total concentration of cations in the aqueous dispersion B-14 were calculated. The results are shown in the following Table.

The aqueous dispersion B-14 was heated to 70°C and stirred at 260 rpm. TFE was injected until the pressure in the reactor reached 1.4 MPaG, and disuccinic peroxide (0.10 mmol) was added to initiate the polymerization. Since the pressure in the reactor decreased as the polymerization started, TFE was added to keep a constant pressure. When the amount of TFE injected reached 60 g, the polymerization become difficult to proceed, and thus after injecting 73 g of TFE, the reactor was cooled to terminate the polymerization. The polymerization time was 360 minutes, and the polymerization rate calculated from the TFE consumption was 21 g/L/h.

The gas remaining in the reactor was recovered, and the liquid was withdrawn. This liquid was taken as aqueous dispersion 2-4. The aqueous dispersion 2-4 was a dispersion that had particles (average particle size: 309 nm) containing the fluorinated polymer 1B and fluorinated polymer 2F dispersed in the aqueous medium, and had a solid content concentration of 11 mass%.

The particles in the aqueous dispersion 2-4 obtained were agglomerated and collected by filtration to obtain a solid composition. The solid composition dried at 120°C had a melting point of 344.2°C and a DSC endothermic peak ratio B/A of 0.750.

**Table 2**

| | | Ex. 2-1 | Ex. 2-2 | Ex. 2-3 | Ex. 2-4 |
|---|---|---|---|---|---|
| Material dispersion | Type of material dispersion (before contact with ion exchange resin) | Material dispersion B | Material dispersion B | Material dispersion B | Material dispersion B |
| | Type of material dispersion (purified material dispersion) (after contact with ion exchange resin) | Material dispersion B-1 | Material dispersion B-2 | Material dispersion B-3 | Material dispersion B-4 |
| | Type of cation exchange resin | Dowex Monosphere 650C | | | Nil |
| | Type of anion exchange resin | AmberLite HPR4200 Cl | DIAION SA10AOH | Purolite A300OH | DIAION SA10AOH |
| Aqueous dispersion obtained by using material dispersion (purified material dispersion) | Type | Aqueous dispersion B-11 | Aqueous dispersion B-12 | Aqueous dispersion B-13 | Aqueous dispersion B-14 |
| | Total concentration [ppm] of cations | Quantitative determination limit or less | Quantitative determination limit or less | Quantitative determination limit or less | 40 |
| | Total content [ppm] of metal elements | <1 | <1 | <1 | 50 |
| | Total concentration [ppm] of specific anions | 1 | 0.1 | 1 | 0.1 |
| | Total concentration [ppm] of other anions | 0.5 | 0.2 | 10 | 0.2 |
| Conditions for production of aqueous dispersion containing fluorinated polymer 2 | Initiator concentration [mmol] | 0.10 | 0.10 | 0.10 | 0.10 |
| | TFE injection amount [g] | 120 | 120 | 120 | 73 |
| | Polymerization time [min] | 429 | 321 | 370 | 360 |
| | Polymerization rate [g/L/h] | 28 | 38 | 33 | 21 |
| Aqueous dispersion containing fluorinated polymer 2 | Type | Aqueous dispersion 2-1 | Aqueous dispersion 2-2 | Aqueous dispersion 2-3 | Aqueous dispersion 2-4 |
| | Solid content concentration [%] | 19 | 18 | 19 | 11 |
| | Particle size [nm] | 292 | 294 | 302 | 309 |
| | Total concentration [ppm] of cations | Quantitative determination limit or less | Quantitative determination limit or less | Quantitative determination limit or less | 5 |
| Solid composition | Melting point [°C] | 343.9 | 344.2 | 338.2 | 344.2 |
| | DSC endothermic peak ratio B/A | 0.462 | 0.383 | Measurement impossible | 0.750 |
| | Total concentration [ppm] of cations | Quantitative determination limit or less | Quantitative determination limit or less | Quantitative determination limit or less | 6 |
| | Total content [ppm] of metal elements | <1 | <1 | <1 | 7 |

As evident from Table 2, it was shown that when aqueous dispersions containing fluorinated polymer 2 (the second fluorinated polymer) were produced at the same initiator concentration and TFE injection amount, the fluorinated polymer obtained by the method for producing a fluorinated polymer of the present invention (Ex. 2-1 to 2-2) had a higher molecular weight from the DSC endothermic peak ratio.

The entire disclosure of Japanese Patent Application No. 2023-213841 filed on December 19, 2023 including specification, claims and summary is incorporated herein by reference in its entirety.

## Claims

1. A method for producing a fluorinated polymer, which comprises polymerizing, in an aqueous dispersion that contains a first fluorinated polymer and an aqueous medium, a monomer containing a fluorinated monomer, to produce a second fluorinated polymer that is different from the first fluorinated polymer, wherein
before the start of the polymerization of the monomer, the total concentration of cations contained in the aqueous dispersion is 2 mass ppm or less to the total mass of the aqueous medium in the aqueous dispersion, and wherein
before the start of the polymerization of the monomer, the total concentration of anions excluding fluoride ions, sulfate ions and chloride ions contained in the aqueous dispersion is 9 mass ppm or less to the total mass of the aqueous medium in the aqueous dispersion.

2. The method for producing a fluorinated polymer according to Claim 1, wherein before the start of the polymerization of the monomer, the total concentration of fluoride ions, sulfate ions and chloride ions contained in the aqueous dispersion, is 50 mass ppm or less to the total mass of the aqueous medium in the aqueous dispersion.

3. The method for producing a fluorinated polymer according to Claim 1 or 2, wherein the first fluorinated polymer is a polymer having a hydrophilic group.

4. The method for producing a fluorinated polymer according to Claim 1 or 2, wherein the first fluorinated polymer has a glass transition temperature of 10°C or lower.

5. The method for producing a fluorinated polymer according to Claim 1 or 2, wherein
before the start of the polymerization of the monomer, the content of the first fluorinated polymer is 0.01 to 4.0 mass% to the total mass of the aqueous dispersion, and wherein
before the start of the polymerization of the monomer, the concentration of a fluorinated emulsifier contained in the aqueous dispersion is 100 mass ppm or less to the total mass of the first fluorinated polymer in the aqueous dispersion.

6. The method for producing a fluorinated polymer according to Claim 1 or 2, wherein the first fluorinated polymer contains units based on tetrafluoroethylene and units based on a perfluoro(alkyl vinyl ether).

7. The method for producing a fluorinated polymer according to Claim 6, wherein in the first fluorinated polymer, the proportion of the units based on a perfluoro(alkyl vinyl ether) is 20 to 60 mol% to the total amount of the units based on tetrafluoroethylene and the units based on a perfluoro(alkyl vinyl ether).

8. The method for producing a fluorinated polymer according to Claim 1 or 2, wherein the amount of the monomer used is 1 to 50 parts by mass per 100 parts by mass of the amount of the aqueous medium used.

9. The method for producing a fluorinated polymer according to Claim 1 or 2, wherein the monomer is polymerized in the presence of a polymerization initiator.

10. The method for producing a fluorinated polymer according to Claim 1 or 2, wherein the fluorinated monomer contains at least one member selected from the group consisting of tetrafluoroethylene, chlorotrifluoroethylene and vinylidene fluoride.

11. The method for producing a fluorinated polymer according to Claim 1 or 2, wherein the fluorinated monomer contains tetrafluoroethylene.

12. The method for producing a fluorinated polymer according to Claim 1 or 2, wherein the aqueous dispersion is obtained via a step of bringing a material dispersion that contains the first fluorinated polymer and the aqueous medium into contact with an anion exchange resin.

13. The method for producing a fluorinated polymer according to Claim 1 or 2, wherein the aqueous dispersion is obtained via a step of bringing a material dispersion that contains the first fluorinated polymer and the aqueous medium into contact with a cation exchange resin.

14. A solid composition comprising a first fluorinated polymer and a second fluorinated polymer that is different from the first fluorinated polymer, wherein
the total concentration of cations is 2 mass ppm or less to the total mass of the solid composition.

15. The solid composition according to Claim 14, which has a total content of metal elements of 2 mass ppm or less to the total mass of the solid composition.
